# FASCICULE DE BREVET EUROPEEN

(11) **EP 0 818 107 B1**
(45) Date de publication et mention de la délivrance du brevet: **24.05.2000**
(21) Numéro de dépôt: 96911003.0
(22) Date de dépôt: 29.03.1996
(51) Int. Cl.: H04N 1/44

(54) **PROCEDE SECURISE DE REPRODUCTION DE DOCUMENTS SENSIBLES**
VERFAHREN ZUR GESICHERTEN WIEDERGABE VON EMPFINDLICHEN DOKUMENTEN
SECURE METHOD FOR DUPLICATING SENSITIVE DOCUMENTS

(30) Priorité: 29.03.1995 FR 9503668
(43) Date de publication de la demande: 14.01.1998
(73) Titulaire: Rank Xerox S.A., 93586 Saint-Ouen Cédex (FR)
(72) Inventeur: Lahmi, Paul, 93586 Saint-Ouen Cédex (FR)
(74) Mandataire: Armengaud Ainé, Alain
(86) Numéro de dépôt international: FR9600481
(87) Numéro de publication internationale: WO9631049

(56) Documents cités:
- EP-A- 0 493 961
- EP-A- 0 617 545
- WO-A-95/01043
- DE-A- 4 432 741
- US-A- 4 728 984

## Description

La présente invention permet d'entraver les facilités actuelles d'espionnage industriel ou autres par les dispositifs de reproduction ou de télédiffusion de documents. Elle permet par le couplage entre d'une part la création d'éléments graphiques complémentaires dans le document et d'autre part la conception de procédés adaptés:
- d'interdire ou contrôler la production ou la diffusion de certains documents à caractère sensible,
- d'altérer suivant des directives prédéfinies la copie de certains documents possédant une valeur intrinsèque afin de faciliter la distinction entre l'original et sa copie,
- autoriser la reproduction ou la diffusion de certains documents moyennant l'acquittement de frais relatifs aux droits d'auteur,
- d'authentifier un original papier ou sa copie par reproduction directe de l'original informatique détenu par l'émetteur originel.
- de produire à partir d'un original papier une copie informatique ou d'exécuter une transaction informatique contrôlée par l'émetteur du document original.
- de produire une copie de tout ou partie d'un document global à partir d'un extrait de celui-ci.

A ces fins, la présente invention centralise les fonctions suivantes:
- Acquisition du document et expression d'une requête de reproduction,
- Traitement du document acquis pour détection du caractère sensible du document et le cas échéant extraction des règles de reproduction attachées au document,
- Gestion et application des règles de reproduction,
- Production du document copié, et, dans certains cas, production d'une copie informatique ou exécution d'une transaction informatique, en fonction des règles de reproduction et de la requête exprimée; si nécessaire par recherche de l'original informatique.

Aujourd'hui, dans les différents éléments caractéristiques de la fabrication ou de la reproduction du document, il existe un certain nombre de risques relatifs à la confidentialité de l'information contenue dans le document ou dans l'utilisation du document produit:
A - Tout document papier de l'entreprise peut être copié aisément et rapidement par un des photocopieurs de l'entreprise. La copie peut ainsi facilement quitté l'entreprise au détriment de celle-ci et sans trace puisque il n'y a pas disparition de l'original.
B - Tout document de l'entreprise peut être reproduit à distance grâce aux systèmes de télécopie et sans laisser la moindre trace de cette fuite pourtant très nuisible à l'entreprise.
C - Les systèmes de reprographie couleur permettent aujourd'hui et permettront de plus en plus, par l'intégration de technologies de plus en plus performantes d'obtenir des copies très fidèles à l'original rendant difficile la différenciation de la copie et de l'original sans recours à une expertise plus ou moins poussée.
D - Les photocopies de documents administratifs, financiers ou attachés à des transactions moyennant quelques retouches indécelables ou falsifications plus ou moins élaborées peuvent occasionner des détournements relativement aux droits qu'ils peuvent générer (fiche d'imposition, extrait de naissance, quittances, contrats, factures, chèques...) quelque soit la sophistication apportée à l'élaboration du document original.
E - Certains documents ont demandés des efforts importants à leur auteur qui n'est aujourd'hui rémunéré que par la diffusion de l'original et non par les éventuelles copies de ces originaux.
F - Certains documents par leur nature (reliure, agrafage..) ou par leur détérioration (document non complet, diffusion partielle) ne permettent pas à leur possesseur d'effectuer simplement une copie du document en leur possession ou du document global d'où ce document est extrait.
G - Pour tout document de nature informatique produit sur une imprimante collective, le document produit qui peut être de nature très confidentiel peut être consulté volontairement ou involontairement par des tiers entre le moment où il est produit et celui où il est récupéré par son propriétaire.

A l'ensemble de ces problèmes liés à la sécurité de diffusion et d'utilisation des documents, les solutions classiques peu efficaces ou trop lourdes qui sont appliquées sont:
A / B - Ces points ne sont résolus que par une surveillance draconienne (mise sous clé) des documents stratégiques de l'entreprise ou par un accès limité aux moyens de reproduction. Ceci est souvent inefficace, par une mauvaise estimation de l'importance stratégique de certains documents et la difficile discipline rarement appliquée relative à cette protection.
C - La protection est assurée par un graphisme élaboré, l'utilisation de médias spécifiques ou de technologies (fil métallique, piste ou encre magnétique, hologrammes...) difficiles à mettre en oeuvre ou coûteuse. La complexité de ces solutions en limite l'usage et souvent seul un expert est capable de distinguer le vrai du faux.
D - Aujourd'hui seules les copies certifiées conformes apportent une sécurité relative qui ne peut être absolue que par requête écrite de confirmation auprès de l'organisme émetteur. Ce processus est lourd et ne peut souvent être mis en place qu'exceptionnellement et lorsqu'un doute existe déjà.
E- Seule les lois relatives à la protection des auteurs permettent d'interdire de telles copies, mais en dehors de sanctions pénales peu faciles à appliquer et peu dissuasives, rien n'entrave réellement de telles infractions.
F- Aujourd'hui l'utilisateur est obligé de déliasser le document ou d'effectuer des copies altérées ou encore d'effectuer une requête manuelle à l'auteur du document lorsque celui-ci peut être identifié et qu'il possède encore les moyens de répondre à cette requête; d'où les limites actuelles.
G - La prolifération d'imprimantes personnelles avec tous les problèmes que cela pose au niveau de l'organisation et de la maintenance et qui ne peut empêcher sur les structures importantes de disposer d'imprimantes collectives pour les travaux plus sophistiqués.

US-A-4 728 984 décrit un système permettant la lecture, dans des conditions spécifiques, d'informations codées contenues dans un document, la lecture et l'impression des informations codées n'étant autorisées qu'après une identification appropriée.

Le procédé et les dispositifs de mise en oeuvre de ce procédé caractérisant l'invention permettent de remédier à ce problème de sécurisation de production, diffusion et utilisation de document sensible.

Avant de définir l'invention, il est utile de définir les différentes natures de document pouvant être traitées par les dispositifs (l'ensemble de ces catégories peuvent avoir des recoupements):
- La première catégorie de document représente tout document de diffusion libre ne possédant ni caractère de confidentialité ni valeur juridique ni caractère de valeur intrinsèque du fait de son aspect et n'entrant dans aucune des catégories suivantes. Ce type de document est dénommé "document classique" pour la suite,
- La deuxième catégorie représente les documents de nature confidentiel, c'est à dire dont les informations contenues ne doivent pas être divulguées de façon libre, cette deuxième catégorie est dénommé "document confidentiel" pour la suite,
- La troisième catégorie représente les documents qui certifient soient des transactions, soient des capacités ou des droits, documents dont la notion d'authenticité est primordiale. Dans cette catégorie, il est possible de ranger les éléments suivants: factures, diplômes,quittances, contrats, actes de justice ou pièces administratives, relevé d'imposition, chèques,titres restaurant,.... Cette catégorie est dénommée "document authentifiable" pour la suite.
- La quatrième catégorie représente tout document dont le contenu est le résultat d'un certain travail et dont la diffusion justifie le paiement de droits à son auteur. Dans cette catégorie, il est possible de classer les livres, les revues.... Cette quatrième catégorie est dénommée "document d'auteur" pour la suite.
- La cinquième catégorie représente tout document dont la copie à l'identique (ou approximativement à l'identique) peut représenter un préjudice pour l'émetteur de l'original par une utilisation détournée des copies éventuelles. Seul le document lui-même a une valeur et non les informations qu'il contient. Dans cette catégorie, il est possible de ranger les billets de banque, les coupons et autres documents à valeur intrinsèque. Cette dernière catégorie est dénommée "Document à valeur" pour la suite.

Pour regrouper toutes les catégories de documents autres que "document classique", nous les regrouperons dans une catégorie générale "document sensible".

De plus, par la suite il sera fait la distinction entre document papier concernant un document classique sur support papier et document informatique caractérisant l'élément informatique qui correspond à l'ensemble des définitions sous forme de fichier(s) informatique(s) d'un document pouvant correspondre après demande d'impression à un document papier.
Pour décrire l'invention, il sera fait référence à la forme numérisée d'un document, il s'agit pour un document papier de sa décomposition en points élémentaires noir ou blanc ou définis par un attribut couleur. Cette décomposition permet un stockage sous forme informatique du fichier et ouvre la possibilité de traitement logique.

La présente invention apporte un procédé de reproduction et de gestion de documents tel que défini dans la revendication 1 ainsi qu'un dispositif pour la mise en oeuvre de ce procédé tel que défini dans la revendication 4.

Sur le document, les nouveaux éléments sont:
- Le marquage,
- Les règles.

Le "marquage" est un élément qui permet de différencier les "documents sensibles" des "documents classiques". Ce "marquage" est assuré par un graphisme particulier (visible ou non) sur l'intégralité du document qui n'altère pas la lisibilité du document proprement dit mais qui doit être détectable même sur une partie réduite du document. Ce "marquage" est présent sur tout document considéré comme un "document sensible" et par conséquent est absent de tout "document classique".

Les règles sont un élément concernant tous les "documents sensibles" et définit les règles et restrictions de reproduction du document en question, cet élément est dénommé "règles" pour la suite. Les règles et restrictions de reproduction peuvent nécessiter la connaissance d'éléments de référencement et d'identification du document présenté, ceux-ci sont donc intégrés aux "règles". Ces "règles" permettent d'associer au document les indications concernant les possibilités de reproduction ainsi que les actions que le dispositif de traitement doit exécuter lorsque une copie du document lui est demandé. Cet élément vient en complément du "marquage" (un document sans "marquage" n'a pas de "règles", et un élément possédant un "marquage" doit posséder des "règles"). Les "règles" sont encodées sur le document en utilisant une technique qui altère au minimum la lisibilité du document proprement dit. Dans le cas où les "règles" autorisent la reproduction du document mais avec altération de l'original, les directives d'altération sont inclues dans les "règles" en utilisant un langage approprié (déjà existant ou spécialement défini pour cette utilité).

Les techniques utilisées pour la définition du "marquage" et des "règles" doivent être compatibles avec la numérisation du document en vue d'une recherche et d'une extraction de ces éléments au sein du document proprement dit.

Le procédé associé comporte les phases suivantes lorsque une reproduction de document est demandée:
- Requête de définition du travail de reproduction à effectuer,
- Présentation du document original papier sur lequel porte la requête de reproduction,
- Numérisation du document original,
- Analyse du résultat de la numérisation pour détection du "marquage" éventuel du document afin de déterminer la nature "classique" ou "sensible" du document; exécution de la requête lorsque le document présenté est de nature "document classique"
- Dans le cas où le document est identifié comme un "document sensible" suite à l'étape précédente, analyse complémentaire pour recherche et extraction des "règles" Dans le cas d'anomalie, rejet de la requête avec éventuellement actions de sécurité.
- Dans le cas où le document est identifié comme un "document sensible" suite aux étapes précédentes, contrôles d'autorisation de la requête en regard des éléments définis dans les "règles" et des éléments caractérisant la requête et le requetteur; rejet de la requête dans le cas où celle-ci n'est pas autorisée avec éventuellement actions de sécurité,
- Dans le cas où le document est identifié comme un "document sensible" et que la requête est autorisée suite aux étapes précédentes, déroulement des actions définies dans les "règles" ou découlant de celles-ci en combinaison avec les éléments complémentaires fournis par le requetteur,
- Production de la reproduction demandée suivant les directives découlant de l'interprétation des "règles" dans le cas ou le document présenté est un "document sensible" et que la reproduction est autorisée. Dans le cas de reproduction autorisée de "document sensible", l'exécution des actions prévues dans les "règles" ou celles en découlant peuvent avoir pour effet d'obtenir une copie différente ou altérée par rapport à l'original et de même peuvent engendrer des actions de gestion liées à la reproduction effectuée. Le document produit à partir d'un original de type "document sensible" est aussi un "document sensible" qui possède un "marquage" et des "règles" propres (pouvant être différentes de celles attachées à l'original).

Pour la mise en oeuvre du procédé, les "marquages" suivants répondant à la définition effectuée sont proposés de façon non limitative (il est souhaitable à titre de normalisation qu'un seul des "marquages" possibles soit retenu):
Un premier "marquage" préconisé consiste en la superposition au document proprement dit d'un brouillard de point ou signes élémentaires.
Un autre "marquage" préconisé consiste à un tramage particulier d'épaisseur élémentaire se superposant au document proprement dit.
Un troisième "marquage" consiste à encadrer tout caractère composant le document par un filet d'épaisseur élémentaire.

Pour la mise en oeuvre du procédé, les "règles" qui sont composées d'un certains nombre d'informations pouvant être caractérisées par des chaînes de caractères alphanumériques et en conséquence en utilisant un encodage informatique classique (1 octet pour un caractère) peuvent être décrites par une succession de valeurs binaires. Pour l'encodage de ces valeurs, l'utilisation de tout code à barre est satisfaisante. Toutefois pour des raisons de discrétion (l'insertion des "règles" ne doit pas nuire à l'esthétique du document) et d'efficacité (le décodage se fait par analyse du document numérisé et non par balayage de faisceau laser), l'encodage suivant est proposé de façon non limitative:
- A des emplacements prédéfinis, plusieurs occurrences des "règles" sont insérées.
- Chaque occurrence est composée d'un entête graphique et de données proprement dites,
- L'entête permet l'identification du caractère "règles" de l'ensemble entête et données et de définir une origine et un sens de lecture des données codées,
- Les données codées sont représentées par une succession à espaces régulier de barres d'épaisseur élémentaire, la présence ou l'absence de cette barre correspondant à la valeur 0 ou 1 de la position correspondante.

Pour assurer une plus grande dépendance entre les "règles" et le document sur lequel elles sont insérées (c'est à dire pour éviter que l'on puisse substituer aisément les "règles" d'un document par celles plus permissives d'un autre), les valeurs encodées pourront être modulées par des valeurs statistiques attachées au document (nombre de caractères de la page par exemple) de façon à ce que le décryptage puisse établir un diagnostic de cohérence entre les "règles" lues et le document associé.

Pour le "marquage" et pour les "règles", il peut être utilisé une encre ne réfléchissant que dans l'infrarouge pour effectuer leur matérialisation; dans ce cas la numérisation du document devra pouvoir fournir un attribut "infrarouge" à chaque point élémentaire du document. Ce "marquage" particulier pourra se limiter aux seuls "documents à valeur"; à condition que tout dispositif capable techniquement de produire une copie de qualité suffisante pour se confondre avec l'original, puisse à la fois détecter le "marquage" classique et ce "marquage" particulier (les autres dispositifs produiront de par leur limitation technologique des copies suffisamment altérées ne pouvant pas en conséquence être considérées comme des "documents sensibles").

Pour la mise en oeuvre de ce procédé à la reproduction en local de "documents sensibles", le dispositif suivant est défini. Ce dispositif est composé des modules fonctionnels suivant: "module interface utilisateur" "module de numérisation", "module d'analyse", "module de contrôle", "module de création" et "module d'impression".
- Le module interface utilisateur peut reprendre ce qui existe déjà sur les systèmes de type "photocopieur" avec la possibilité pour l'utilisateur de définir sa requête et de pouvoir s'identifier précisément (nom, mot de passe, service...) soit par saisie soit par présentation de badge.
- Le "module de numérisation" pourra être un numériseur classique ("scanner") avec éventuellement un automatisme de circulation papier pour pouvoir numériser un lot de documents en entrée. Le numériseur fournit une décomposition en points élémentaires noirs et blancs ou avec des attributs de couleur suivant le cas afin de permettre une exploitation informatique du document présenté. Dans le cas ou le "marquage" et les "règles" utilisent des encres ne réfléchissant que dans l'infrarouge, le numériseur doit pouvoir fournir un attribut infrarouge à chaque point élémentaire du document en plus de la numérisation classique.
- Pour le "module d'analyse", le "module de contrôle" et le "module de création", les fonctions sont assurées par une intelligence informatique (microprocesseur ou équivalent) avec des bus de communications internes satisfaisant au pilotage de l'ensemble des modules du dispositif. Le module d'analyse intègre des algorithmes adaptés à la détection et à l'extraction du "marquage" et des "règles" à partir du document numérisé. Le "module de contrôle" assure le pilotage de l'ensemble des modules et leur cohésion. Le "module de création" compose l'image numérisée du document à produire (lorsque cela est autorisé) à partir de l'image numérisée du document original sans son "marquage" et ses "règles" en respectant les directives de modification contenues dans les règles de l'original. Le document ainsi constitué comporte son propre "marquage" et ses propres "règles".
- Le "module d'impression" qui permet à partir des éléments informatiques correspondants d'obtenir lorsque cela est autorisé la copie papier définie par la requête utilisateur pourra être assuré par le module analogue existant dans les photocopieurs numériques ou sur les imprimantes. Dans le cas ou le "marquage" ou les "règles" utilisent des encres ne réfléchissant que dans l'infrarouge, le "module d'impression" devra pouvoir en assurer l'impression.

L'ensemble des modules ainsi défini constitue une entité fonctionnelle dénommé pour la suite "serveur de document". L'entité fonctionnelle "serveur de document" pourra être enrichie de nouveaux modules fonctionnels en fonction des caractéristiques suivantes de l'invention.

Le dispositif ainsi défini pourra lorsqu'un utilisateur désire reproduire un "document sensible" (identifié comme tel par le "marquage") effectuer les actions suivantes:
- Déroulement de contrôles d'autorisation découlant du décryptage des "règles" du document présenté vis à vis de l'utilisateur via le "module interface utilisateur",
- Actionnement de systèmes de sécurité (capture de l'original, alarme...) dans le cas de reproduction non autorisée d'un document de type "document confidentiel",
- Comptabilisation de droits d'auteur relatifs au document pour permettre un relevé régulier de ces droits par une personne ou organisme habilité dans le cas de reproduction de document de type "document d'auteur",
- Génération d'une copie modifiée par rapport à l'original par exécution des directives de modification du document issu de la reproduction vis à vis de l'original; ces directives découlent de l'interprétation des règles, ceci plus particulièrement et de façon non limitative pour les documents de type "document à valeur".

Pour mettre en oeuvre le procédé dans le cas de reproduction à distance, le même dispositif que précédemment peut être utilisé à condition d'y inclure deux nouveaux modules fonctionnels: un "module de communication" et un "module de gestion des sorties". Ces deux nouveaux modules font partie de l'entité fonctionnelle "serveur de document".
- Le "module de communication" permet à deux "serveurs de document" identiques de dialoguer et d'échanger tout fichier informatique nécessaire à la reproduction de documents. Ainsi un "serveur de document" récepteur assure la requête de reproduction d'un "serveur de document" émetteur; les deux "serveurs de document" ensemble respectent globalement le procédé décrit pour l'invention. Le "module de communication" pourra reprendre les modules équivalents de télécopieurs ou de stations informatiques connectés à un réseau informatique. A ce niveau peut être intégré tout protocole assurant la sécurisation au niveau confidentialité des données transmises.
- Le "module de gestion des sorties" est un module informatique activé lorsque la copie demandée résulte d'une requête externe (à partir d'un autre dispositif) et qui exerce une rétention sur le document à produire, ne le libérant que lorsque le destinataire s'est identifié auprès du "serveur de document" récepteur produisant le document.

Pour permettre au dispositif non seulement de reproduire des "documents sensibles" en local ou à distance mais aussi de produire les originaux de "document sensibles", celui-ci conserve l'entité fonctionnelle "serveur de document" identique au niveau composants par rapport à la définition antérieure; avec uniquement des adaptations dans son fonctionnement. Parallèlement un "pilote" est ajouté sur tout système informatique devant imprimer des documents sensibles. Ce "pilote" est un module informatique intégré au système informatique hôte qui a pour fonction d'envoyer au "module de communication" du "serveur de document" en utilisant les possibilités de communication du système informatique:
- Le document proprement dit sous forme numérisé issu d'un applicatif résidant sur ce système,
- Les "règles" associées au document où les éléments permettant de les reconstituer,
- Les caractéristiques d'impression proprement dit (Format papier, Recto-Verso, Pages à imprimer, nombre d'exemplaire Orientation...) ainsi que l'identifiant de l'émetteur par rapport au dispositif récepteur lorsque le document à produire est un "document sensible".

La transmission de ces informations permet au dispositif d'exécuter une impression d'un original de document sensible en utilisant le même processus que pour la reproduction en local à partir d'une requête de reproduction distante.

Pour mettre en oeuvre le procédé dans le cas de production d'originaux de "documents authentifiables" et la production de copie authentifiées à partir de ces mêmes originaux, le dispositif comprenant le "serveur de document" et le "pilote" tels que définis précédemment intègre deux nouveaux modules fonctionnels: le "module annuaire" intégré à l'entité fonctionnelle "serveur de document" et le "serveur d'archivage":
- Le "module annuaire" est un module informatique, il permet localement de faire correspondre des adresses informatiques (permettant sur un réseau de communication informatique d'établir une session de communication avec le correspondant désigné) à l'identification de l'organisme émetteur tel qu'il peut être défini dans les règles. Ce "module annuaire" est mis à jour par le détenteur du "serveur de document" (via un dialogue adapté au niveau du "module interface utilisateur" ou par une liaison informatique avec les systèmes informatiques du détenteur du "serveur de document") de façon à n'accepter d'authentifier que des documents d'organismes homologués parfaitement identifiés. Ceci évite que des "règles" falsifiées référençant des organismes fictifs soient utilisées; dans ce cas, le dispositif ne pourra authentifier le document car il sera impossible au faussaire de faire établir une liaison entre le dispositif et ce faux organisme.
- Le "serveur d'archivage" est un système informatique classique possédant des caractéristiques de stockage, traitement et communication suffisantes. Il comprend lui même principalement les deux sous-modules fonctionnels "module de communication" (du serveur d'archivage) et "gestionnaire d'archivage",:
   - le "module de communication" (du serveur d'archivage) permet au "serveur d'archivage" de communiquer avec tout système informatique devant produire des originaux de "document authentifiable" et avec tout "serveur de document" devant produire à partir d'un original de "document authentifiable" une copie authentifiée,
   - le "gestionnaire d'archivage" effectue toute gestion et tout contrôle nécessaires sur le "serveur d'archivage" à la production de "document authentifiable" et à la production de copie authentifiée à partir de "document authentifiable".

Ainsi, lorsqu'un système informatique produit un "document sensible" authentifiable sur un "serveur de document", le "pilote" associé au dispositif envoie simultanément à l'envoi sur le "serveur de document" le même document sous sa forme informatique accompagné des éléments complémentaires définissant les "règles" sur le "serveur d'archivage".

Lorsqu'un utilisateur désire obtenir une copie authentifiée d'un "document authentifiable" sur un "serveur de document", après identification du caractère sensible du document par la détection du "marquage" et contrôle d'autorisation suite à l'interprétation des "règles", le "serveur d'archivage" attaché au document à reproduire est recherché pour que celui-ci envoie les éléments informatiques nécessaires à l'exécution de la requête. Lorsque l'original présenté ne représente qu'un extrait de l'original informatique archivé correspondant le "serveur d'archivage" permet au requetteur d'élargir sa requête en envoyant au "serveur de document" tous les éléments nécessaires définissant le document global. Le "serveur d'archivage" parallèlement à l'exécution de la requête effectue tout contrôle d'autorisation complémentaire nécessaire ou toute opération de gestion associée à la délivrance de la copie il peut aussi envoyer des directives complémentaires aux "règles" encodées dans l'original présenté en vue de la production de la copie (par exemple pour faire apparaître en clair sur la copie le caractère de copie ainsi que la date d'obtention de celle-ci). Le "serveur d'archivage" gère également lorsque cela est requis les redevances relatives aux droits d'auteur.

A partir d'un "document authentifiable", l'obtention d'une copie informatique voire l'exécution d'une transaction informatique(ex.: un chèque émis par un organisme X et présenté par un utilisateur Y génère sous le contrôle du système d'archivage de X un virement du compte de X vers le compte de Y) dépendant de l'original présenté peut être préférable à l'obtention d'une copie papier.

Pour mettre en oeuvre le procédé dans le cas de production de copie informatique ou transaction informatique authentifiée à partir d'un original de "document authentifiable", le dispositif comprenant le "serveur de document", le "pilote" et le "serveur d'archivage" tels que définis précédemment intègre le nouveau module fonctionnel: "module de traitement":
- le "module de traitement" est intégré sur tout système informatique devant réceptionner la copie ou la transaction informatique authentifiée requise, il gère la réception des éléments informatiques de la part du "serveur d'archivage" suite à la requête exprimée au niveau du "serveur de documents" pour produire sur le système informatique hôte l'élément demandé, le "serveur de documents" effectue tous les traitements d'analyse et contrôle nécessaire au traitement du "document sensible".

Les dessins et schémas annexés illustrent l'invention:
- Le schéma 1 est un organigramme du procédé,
- les schémas 2 à 4 schématisent les différents exemples de "marquages" préconisés conformément à la définition effectuée dans le procédé,
- Le schéma 5 est une représentation d'une occurrence de "règles" dans le cadre de la préconisation effectuée dans la présente invention,
- Le schéma 6 est un exemple d'implantation des différentes occurrences de "règles" dans un document utilisant le premier type de "marquage" préconisé,
- Le schéma 7 illustre l'adaptation effectuée sur un encodage de "règles" dans le cadre de la préconisation pour un "marquage" de type trame.
- Le schéma 8 illustre la composition organique et le fonctionnement du dispositif de mise en oeuvre du procédé dans le cadre d'une reproduction locale.
- Le schéma 9 illustre la composition organique et le fonctionnement du dispositif de mise en oeuvre du procédé dans le cadre d'une reproduction distante
- Le schéma 10 illustre la composition organique et le fonctionnement du dispositif de mise en oeuvre du procédé dans le cadre d'une impression en provenance d'un système informatique
- Le schéma 11 illustre la composition organique et le fonctionnement du dispositif de mise en oeuvre du procédé dans le cadre de la production d'un original authentifiable.
- Le schéma 12 illustre la composition organique et le fonctionnement du dispositif de mise en oeuvre du procédé dans le cadre de la production d'une copie authentifiée papier, d'une copie authentifiée informatique ou d'une transaction informatique authentifiée à partir d'un original authentifiable.

En référence à ces dessins et schémas, suit la description détaillée de l'invention:

Le procédé enchaîne les phase suivantes:
- Formulation de la requête (101):
   le procédé est initialisé par une requête de reproduction qui précise quel est le travail à effectuer sur l'original qui sera présenté. Cette définition permet de définir entre autres le papier et le format de sortie, le nombre de copie, la nature locale ou à distance de la copie. Dans le cas où le document présenté ne représente qu'un extrait d'un "document authentifiable" plus global, le requetteur n'indique à ce niveau que son désir d'obtenir une copie authentifiée, l'intégralité de la requête étant définie dans ce cas dans la phase de contrôle d'autorisation de la requête (cf 108)
- Présentation de l'original papier (102):
   Suite à la requête, le document à dupliquer est présenté. Pour cela la page ou les pages devant être reproduites sont présentées dans l'ordre désiré. Toutefois, pour le procédé, chaque page est un élément à part entière qui est traité de façon distincte, les phases suivantes peuvent engendrer des actions différentes en fonction de chacune des pages présentées. Le document présenté ne peut représenté qu'un extrait d'un document plus global si celui-ci est de nature document authentifiable et que le requetteur désire obtenir une copie de tout ou partie de ce document global indépendamment de l'extrait présenté.
- Numérisation de l'original (103):
   Afin de pouvoir être traité par un algorithme logique, le document papier qui est un élément matériel est transformé en élément logique. Dans ce but la numérisation modélise chaque page présentée en une matrices de points. A chaque point est associé un attribut: blanc, noir, couleur, infrarouge ou autre en fonction de la technologie employée pour matérialiser l'information sur le document.
- Recherche de "marquage" (104):
   Sur l'image logique de chaque page (c'est à dire après numérisation), une recherche est effectuée pour détecter la présence de "marquage". Le "marquage" étant un élément graphique prédéterminé et normalisé dans le cadre de l'invention, un algorithme de détection peut être défini en fonction du "marquage" sélectionné. L'algorithme doit tenir compte d'une marge d'erreur correspondant à l'imperfection de l'impression et de la numérisation. Le résultat de cette phase est une valeur logique: OUI dans le cas où un "marquage" est détecté sur la page logique traitée et NON lorsqu'aucun "marquage" n'est détecté sur la page logique. Cette valeur conditionne la suite du traitement.
- Traitement en cas de non détection de "marquage" (105):
   Dans le cas où aucun "marquage" n'a été détecté sur la page traitée, la requête initiale est effectuée pour cette page puisqu'elle constitue un "document classique". Toutefois la requête globale ne sera intégralement pris en compte que si toutes les pages présentées pour une même requête sont des "documents classiques".
- Traitement en cas de détection de "marquage" positive: Recherche des "règles" et contrôle de cohérence (106).
   En présence de "marquage", le document est considéré comme un "document sensible". Dans ce cas, des contraintes de reproduction sont définies et sont insérées sous forme de "règles" dans le document. La présente étape a pour but de les détecter et de vérifier leur validité ainsi que de les extraire. Les règles étant encodées sous forme d'un codage binaire graphique prédéterminé et normalisé, un algorithme de détection et extraction peut être défini, incluant les contrôles de validité binaire si cela est prévu dans l'encodage. Dans le cas où l'encodage prévoit plusieurs occurrences dans la page, la cohérence du décryptage des différentes occurrences est effectuée. Dans le cas où l'encodage est modulé par des valeurs statistiques relatives au contenu du document proprement dit, ces valeurs statistiques sont recalculées afin de valider les valeurs des "règles" extraites. Le résultat de cette étape est un valeur logique: OUI dans le cas où des "règles" valides sont détectées dans la page traitée et NON dans le cas où le document ne comporte pas de "règles" ainsi que dans le cas où le document comporte des "règles" invalides. En parallèle à cette valeur, un diagnostic plus précis peut être fourni en vue de traitements appropriés.
- Traitement en cas de présence de "marquage" et d'absence de "règles" valides (107)
   Ce cas étant considéré comme anormal (le procédé défini la présence complémentaire d'un "marquage" et de "règles"), la requête initiale relative à la page traitée est rejetée. De plus des actions de sécurité peuvent être engendrées: alarme, capture de l'original, mémorisation de la requête et de son auteur....
- Traitement en cas de présence de "marquage" et de présence de "règles" valides (108)
   Les "règles" sont interprétées pour vérifier que la requête exprimée est autorisée et des contrôles complémentaires vis à vis du demandeur sont effectués (l'autorisation peut dépendre des caractéristiques du demandeur ou de la requête elle-même: par exemple la reproduction locale peut être autorisée mais pas la reproduction à distance). Dans le cas où la requête exprimée concerne l'obtention d'une copie authentifiée, indépendamment des contrôles d'autorisation qui sont fait systématiquement pour tout document sensible, un contrôle complémentaire est effectué pour vérifier que le document présenté est bien un "document authentifiable"; dans ce cas, les éléments caractérisant l'original informatique du document global correspondant au "document authentifiable" présenté sont recherchés afin que le requetteur puisse si nécessaire compléter la définition de sa requête voire de l'abandonner. A l'issue de ces contrôles, une valeur logique est mise à jour: NON si la requête exprimée n'est pas autorisée ou non maintenue et OUI si la requête est autorisée et maintenue (la phase de contrôle peut faire apparaître une redevance que le demandeur peut accepter ou refuser).
- Traitement en cas de requête non autorisée ou non maintenue (107)
   Comme dans le cas où il y a présence de "marquage" et d'absence de "règles" valides, la requête est rejetée et il y a éventuellement activation de systèmes de sécurité si la requête initiale correspond à une tentative de violation d'un document de type "document confidentiel" par une personne non autorisée.
- Traitement en cas de requête autorisée sur "document sensible" (109)
   L'image numérisée du document à produire est générée en fonction des directives découlant de la nature de la requête et de l'exploitation des "règles", cela inclus notamment des modification vis à vis de l'original (masquage, surimpression, suppression de couleur, modification de graphisme...); ceci peut aussi avoir pour conséquence de construire l'image de la copie proprement dite non pas par rapport à l'image numérisée issue du document présenté mais à partir d'un original informatique attaché au document présenté lorsque il est requis une copie authentifiée. Ces directives auront pu être encodées dans les règles par des ordres élémentaires exprimés dans un langage approprié. L'image ainsi constituée comporte un "marquage" propre indépendant du "marquage" du document original et des "règles" propres qui pourront être différentes des "règles" initiales (en particulier les droits de reproduction de la copie obtenue pourront être différents de ceux de l'original). En plus de ces actions directes sur le document produit, des actions complémentaires pourront être effectuées relativement à la comptabilisation de droit d'auteur (en fonction des informations contenues dans les "règles") ou globalement sur la gestion de production des documents sensibles (date, heure, références des documents produits, identité des demandeurs...) pour consultation par un gestionnaire approprié.
- Exécution de la requête (110)
   Le document sous sa forme numérisée est transformé en document papier.

Pour la mise en oeuvre de ce procédé, il faut établir un "marquage" prédéfini et normalisé, dans ce sens plusieurs "marquages" types sont préconisés par l'invention. Les schémas 2 à 4 en donne un représentation.

Dans les définitions qui suivent, à chaque fois qu'il est indiqué épaisseur élémentaire cela signifie que l'on choisi l'épaisseur la plus fine pouvant être imprimée puis détectée suite à une numérisation (éventuellement modulé par un algorithme capable de compenser partiellement ces limitations).

Le premier "marquage" préconisé porte sur un document type (201) composé de plusieurs parties cohérentes qui sont des paragraphes ou des graphiques (dans l'exemple indiqué ce document possède deux parties cohérentes qui sont 2 paragraphes (202) et (203)). En dehors des parties cohérentes, le document possède des marges générales (204) et des marges séparant les parties cohérentes (205). Uniquement dans les parties cohérentes en dehors des caractères (207) ou graphiques composant le document, des points isolés (206) sont disposés dans l'intégralité des parties cohérentes sans se superposer aux composantes d'impression des textes et graphiques suivant des normes de densité préétablies. Au contraire de la représentation du schéma 2, les points sont suffisamment fins pour ne pas gêner la visibilité du document (ici, il sont plus imposant à des fins d'illustration, d'autre part la densité utilisée n'est pas représentative de celle qui servira de normalisation); les points peuvent être remplacés avantageusement par tout symbole plus complexe (d'épaisseur élémentaire pour ne pas nuire à la lisibilité du document).

Le deuxième "marquage" préconisé consiste pour un document type (210) comportant un ensemble d'éléments textes et graphiques (211) de superposer une trame. Dans le cas retenu, la trame est constitué de barres obliques (212) parallèles partant d'un bord du document à l'autre suivant un espacement prédéfini et d'épaisseur élémentaire afin de ne pas nuire à la lisibilité du document.

Le troisième "marquage" préconisé consiste pour un document type (non représenté) d'encadrer chaque caractère (221) par un filet rectangulaire (222) d'épaisseur élémentaire.

Les "règles" préconisées sont encodées sur un document sous formes de plusieurs occurrences identiques. Chaque occurrence comporte un entête (231) et une partie données (232). L'entête (231) permet d'identifier une occurrence et de déterminer son sens de lecture, à ce titre l'entête dans la préconisation proposée comporte un signe " +" (233) d'épaisseur élémentaire suivi par une barre d'orientation (234) d'épaisseur élémentaire. Cet entête (231) permet d'identifier et décrypter la partie données (232) pour laquelle à chaque espacement prédéfini une barre d'épaisseur élémentaire par sa présence (235) ou son absence (236) fournit une valeur binaire 0 ou 1. L'assemblage de ses valeurs binaires permet de reconstituer les valeurs interprétables des "règles". Pour un même document, plusieurs occurrences de "règles" sont insérées, ainsi dans un document type (241) utilisant par exemple un "marquage" de type brouillard de points, il est possible de définir des marges générales encadrant le document et des marges intermédiaires séparant chaque partie cohérente du document (242): paragraphes, graphiques... Une occurrence de "règles" est insérées dans chaque marge principale, à chaque extrémité et au milieu (243) dans la limite de la place disponible. De même, une occurrence est insérée à chaque extrémité et au milieu de chaque marge intermédiaire (244) dans la limite de la place disponible.
Dans le cas où le "marquage" utilisé est de type trame, le graphisme des "règles" est adapté pour s'insérer entre deux éléments de trame (251), Les "règles" restent constituées d'un en tête (252) et d'une partie données (253), les signes et barres constituant l'encodage de ces éléments ((254) (255) (256) et (257)) sont adaptés pour conserver un parallélisme entre eux-même, lorsque cela est justifié, et avec les éléments de trame (251).

Le dispositif proposé pour la mise en oeuvre du procédé dans son utilisation pour une reproduction locale est matérialisé par un "serveur de document" (1) qui comporte principalement les modules fonctionnels suivants:un "module interface utilisateur" (11), un "module de numérisation" (12), un "module de contrôle" (15), un "module d'analyse" (16), un "module de création" (17) et un "module d'impression" (14). Ce "serveur de document" (1) permet à un utilisateur (31) à partir d'un document original papier (41) de requérir un document copie papier (43). Pour se faire, l'utilisateur (31) introduit son original (41) dans le "module de numérisation" (12) et défini son travail de copie auprès du "module interface utilisateur" (11) Suite à cette requête, le "module interface utilisateur" (11) la communique au "module de contrôle" (15). Ce module (15) commande le "module de numérisation" (12) pour que celui-ci (12) fournisse à partir de l'original papier (41) un document numérisé (42) donc exploitable par une intelligence de type informatique. Lorsque le document numérisé initial (42) image du document présenté (41) est obtenu, le "module de contrôle" sollicite alors le "module d'analyse" (16). Ce module (16) à partir du document numérisé initial (42) extrait le document proprement dit de base (44) c'est à dire excluant tout "marquage" ou tout élément correspondant à des "règles". En parallèle à ce résultat le module d'analyse détermine la présence ou non d'un "marquage" et dans le cas où cette détection est positive recherche les "règles" et les lit pour en former un fichier informatique exploitable (45); ce module (16) valide à ce niveau la concordance entre les "règles" lues et le document présenté (41), un diagnostic concernant cette concordance est intégrées aux "règles" exploitables (45). Lorsque aucun "marquage" n'est détecte, ce qui signifie que l'original (41) est un document de type "document classique"; le "module de contrôle" (15) sollicite alors le "module de création" (17) pour que celui-ci confectionne directement à partir du document numérisé de base (44) le document numérisé final (47). Puis le "module de controle"(15) sollicite le "module d'impression" (14) pour l'obtention directe de la copie demandée (43) à partir du document numérisé final (47). Si un "marquage" a été détecté et qu'aucune "règle" n'a pu être lue ou que les différentes occurrences des "règles" lues ne sont pas cohérentes entre elles ou que les "règles" lues ne correspondent pas au document présenté (41), le "module de contrôle" (15) refuse d'effectuer la copie en détruisant les fichiers résultants de l'analyse (42) et (45); et, suivant le cas prévient l'utilisateur en sollicitant le "module interface utilisateur" (11) ou déclenche une action de sécurité: alarme, capture de l'original.... Dans le cas où un "marquage" a été détecté et que des "règles" cohérentes ont été lues, le module de contrôle traite ces "règles" et effectue les traitements correspondants. Dans le cas où la copie (43) doit être produite et que l'original est un "document sensible", le "module de contrôle" (15) construit les nouvelles "règles" (46) associées au document à produire (43) et passe la main au "module de création" (17). Ce module (17) à partir du document numérisé de base (44) et des nouvelles "règles" (17) construit une image sous forme de document numérisé (47) du document à produire (43) incluant le document proprement dit, le "marquage" et les "règles" éventuelles liées à ce document; le "module d'impression" construit alors le document à produire (43) à partir de cette modélisation informatique (47).

Pour le premier "marquage" préconisé (brouillard de points), la recherche de "marquage" peut se faire de la façon suivante:
- Recherche des zones cohérentes du document présenté soit pour l'exemple les zones (202) et (203). Pour cela élimination de toute partie rectangulaire blanche du document de largeur en points élémentaires ("dots") supérieure à une largeur prédéfinie et de même pour la hauteur (une partie est considérée blanche lorsque la densité des points isolés présents est inférieure à une certaine valeur); ceci a pour effet d'éliminer dans le cas de l'exemple du schéma 2 les marges (204) et (205). Tout élément graphique pouvant faire partie d'une occurrence de "règles" (signe + ou barre, dans le cadre de la préconisation) est considérée comme "partie blanche" dans le cadre de la présente recherche.
- De la zone résultante de l'étape précédente; soit dans le cas de l'exemple les parties (202) et (203), est comptabilisée la surface potentielle en points élémentaires d'impression de l'intégralité de cette zone. Ceci donne un nombre NDOT. Dans cette zone est recherché tout élément d'impression caractérisé par l'accolement de plusieurs points élémentaires d'impression ce qui est la cas par exemple d'un caractère soit pour l'exemple du schéma 3 les caractères équivalents à (207). La surface globale en dots de tous ces éléments est comptabilisée soit NUTIL. Une nouvelle recherche permet de comptabiliser tout les points élémentaires d'impression isolés soit NMARQ.
- Des résultats précédents est calculée la densité de marquage par la formule D = NMARQ/(NDOT-NUTIL), celle-ci est comparée à la densité normalisée caractérisant le "marquage". Cette résultat de cette comparaison servira de diagnostic pour définir la caractère sensible ou classique du document présenté.

Pour le deuxième "marquage" préconisé (trame), une recherche est effectuée sur tout le document (210) pour détecter toutes les occurrences de morceaux de trames (212) (dans l'exemple: un morceau de trame pourra être défini comme une barre oblique d'épaisseur élémentaire d'au moins 1 cm de long par exemple). En fonction du nombre d'éléments ainsi trouvés et de leur répartition géographique dans la page, un diagnostic de présence de trame normalisée peut être effectué et par conséquent il peut être établi un diagnostic quant à la nature de "document sensible" ou "document classique" de la page présentée.

Pour le troisième "marquage" préconisé (encadrement filet), une recherche est effectuée sur toute la page pour identifier l'ensemble des caractères (221) la composant. Pour chaque caractère identifié, il est vérifié si celui-ci possède un encadrement par un filet élémentaire (222). Si un document possède plus d'un certain nombre de caractères dans la page possédant un tel encadrement, le document est considéré comme "document sensible" et "document classique" dans le cas contraire.

Dans le cas où le document est considéré comme "document sensible" (suite à la détection d'un "marquage"), toute occurrence de "règle" est recherchée. Pour cela il est recherché l'identifiant graphique de "règles" (233) ou (254) validé par la barre d'orientation (234) ou (255). Après détection de l'entête (231) ou (252) ainsi défini, les données (232) ou (253) sont recherchées. Pour cela à chaque écartement élémentaire, il est détectée la présence (235)/(255) ou l'absence (236)/(257) de barre. La détection complète permet de décrypter l'encodage de l'occurrence et d'éventuellement de la valider. Si des valeurs de contrôle d'intégrité de l'encodage sont définies (total binaire de contrôle par exemple), cette validité est contrôlée. Si plusieurs occurrences de "règles" sont détectées, leur cohérence est validée. Si les valeurs encodées sont modulées par des valeurs statistiques liées au document présenté, ces valeurs statistiques sont recalculées pour vérifier la concordance des "règles" lues avec le document présenté.

Dans le cas où le document est reproductible avec contrainte, le "module de contrôle" (15) enchaîne les traitements découlant de l'interprétation des "règles" (45) du document (41), cela sera suivant le cas:
- requête de contrôle au "module interface utilisateur" (11) d'autorisation de l'utilisateur (31) par rapport à l'accès défini dans les "règles",
- comptabilisation des droits d'auteur si le document est de type "document d'auteur",
- si la reproduction est autorisée, confection à partir des "règles initiales" (45) des "règles finales" (46) qui sont les "règles" associées au document à produire (43),
- sollicitation du "module de création" (17) avec éventuellement transmission de directives de modification du document numérisé de base; ces directives correspondent à l'interprétation des "règles" du document initial (41).
Le "module de contrôle" (15) sollicite le "module d'impression" (14) lorsque le "module de création" (17) a terminé la confection du "document numérisé final" (47).
Dans tous les cas où la reproduction n'est pas autorisée (suite à un diagnostic du "module d'analyse" ou après requête infructueuse d'identification de l'utilisateur (31) auprès du "module interface utilisateur" (11), le "module de contrôle" actionne éventuellement les systèmes de sécurité (alarme, capture de l'original...) et détruit tout élément interne dans le dispositif construit à partir du document initial (41): "document numérisé initial" (42), "règles initiales " (45) et "document numérisé de base" (44).

Le "module de création" (17) construit le "document numérisé final" (47) directement à partir du "document numérisé de base" lorsque le document à reproduire (41) est un document de type "document classique". Dans les autres cas, le document numérisé final (47) est construit à partir du "document numérisé de base" (44), des "règles finales" (46) et des directives de modification éventuelles transmises par le "module de contrôle" (15); à ces éléments, le "module de création" (17) introduit un nouveau "marquage".

Le dispositif proposé pour la mise en oeuvre du procédé dans son utilisation pour une reproduction distante est matérialisé par un "serveur de document" (1) qui comporte en plus des modules utilisés pour la reproduction distante:le "module de communication" (18) et le "module de gestion des sorties" (19).
Lorsque un utilisateur (31) sollicite son "serveur de document" (1) pour transmettre un document (41) à son correspondant via le "serveur de document" (2) distant de ce correspondant (32), il (31) introduit son document (41) sur son "serveur de document" (1) comme pour une copie locale; les 2 "serveurs de document" (1) et (2) de l'utilisateur (31) et du correspondant (32) sont identiques. Le pilotage des modules est assuré par le "module de contrôle" (15) du "serveur de document" concerné. Après que la requête soit exprimée via le "module interface utilisateur" (11) du "serveur de document" émetteur (1), le "module de numérisation" (12) de l'émetteur (1) produit un document sous forme numérisé (42). Ce document (42) est analysé par le "module d'analyse" (16) de l'émetteur (1) suivant le même principe que pour l'obtention d'une copie en locale. Ce module (16) sur l'émetteur (1) produit comme dans le cas du fonctionnement en local le document numérisé de base (44) (excluant tout "marquage" et toute "règle"), et les "règles" initiales (45) attachées au document d'origine (41). A ce niveau le "module de contrôle" effectue les mêmes opérations de contrôle, de comptabilisation, de construction des "règles" finales (46) ou de construction de directives de modification de la copie découlant de l'exploitation des "règles" initiales (44) en vérifiant que le document (41) est reproductible à distance (suivant information contenue dans les "règles") puis exécute une requête auprès de l'utilisateur (31) via le "module interface utilisateur" (11) du "serveur de document" émetteur (1) pour obtenir l'identification du "serveur de document" récepteur (2) et l'identifiant du correspondant (32) par rapport au récepteur (2) ou toute information équivalente. L'identification du "serveur de document" (2) est soit un numéro téléphonique en cas de liaison de type téléphonique soit une adresse réseau informatique dans le cas d'utilisation d'une liaison informatique. L'identifiant du correspondant (32) et le même que celui qui permet à un utilisateur de s'identifier au "serveur de document" dans le cadre d'une copie locale, cet identifiant dans le cas de l'exemple choisi doit être accompagné d'un mot de passe (cela n'est pas nécessaire si le correspondant a d'autres moyens de s'identifier de façon sure: badge magnétique ou équivalent). Si la copie à distance est autorisée, après que l'utilisateur (31) ait fourni l'identification du récepteur (2) et l'identification du correspondant (32) vis à vis du récepteur (2), le module de contrôle sollicite le "module de communication" (18) de l'émetteur (1) pour transmettre au récepteur (2) les éléments permettant la copie à distance. Le "module de communication" (18) de l'émetteur (1) établit une session de communication avec le "module de communication" (18) du récepteur (2) en utilisant suivant le cas soit un réseau téléphonique soit un réseau de type informatique (71). Par cette communication sont transmis le document numérisé de base (44), les "règles" finales (45) et éventuellement les directives de modification de la copie par rapport à l'original; ceci complété par l'identifiant du correspondant (32) vis à vis du récepteur (2). Suite à cette réception, le "module de contrôle" (15) du récepteur (2) sollicite le "module de création" (17) du récepteur (2) pour construire sur le récepteur (2) le "document numérisé final" (47) à partir du "document numérisé de base" (44) sur le récepteur (2) et des "règles finales" (46) sur le récepteur (2) ainsi qu'éventuellement les directives de modification de la copie par rapport à l'original. Le "document numérisé final" (47) est alors pris en charge par le "module de gestion des sorties" (19) du récepteur (2) qui le stocke sur une file d'attente spécifique (non représentée sur le schéma) en lui attachant l'identifiant du correspondant (32) désigné par l'utilisateur (31) émetteur. Pour obtenir la copie désirée, le correspondant (32) doit s'identifier auprès du récepteur (2) via le "module interface utilisateur" (11) du récepteur (2) par saisie de son identifiant et de son mot de passe (ou suivant le cas par un badge magnétique ou équivalent). Suite à cette identification, tous les documents reçus sur le "serveur de document" récepteur (2) et attachés au correspondant (32) identifié sont listés. Le correspondant (32) libère alors le(s) document(s) qu'il désire obtenir, dans ce cas, le "module de gestion des sorties" (19) du récepteur renvoie le(s) document(s) correspondant de sa file d'attente vers le "module d'impression" (14) du récepteur (2) pour obtenir la(les) copie(s) désirée(s) (43). Si des opérations de gestion sont nécessaires relativement aux copies de "documents sensibles" fournies, celles-ci ont lieu uniquement au moment de la délivrance réelle du(des) document(s) (43).

Le dispositif proposé pour la mise en oeuvre du procédé dans son utilisation pour exécuter une impression en provenance d'un système informatique est matérialisé par un "serveur de document" (1) qui comporte les mêmes composants fonctionnels que pour la reproduction distante, et, d'un "pilote"(82) disposé sur tout système informatique devant produire des "documents sensibles". L'utilisateur informatique (33) conçoit un document par l'utilisation d'un applicatif (81) résidant sur un système informatique (72). Le résultat de cette conception est l'image du document sous forme numérisé (48) En fait le résultat sera l'image du document sous forme descriptive par l'utilisation de primitives d'un langage de description de page: dans ce cas un sous-module interpréteur doit être introduit soit au niveau du système informatique (72) soit au niveau du "serveur de document" (1). Par simplification, le schéma 9 prend l'hypothèse simplificatrice que le résultat de l'applicatif est un document sous forme numérisé. Pour envoyer le document sur le "serveur de document" (1), un "pilote" (82) est installé sur le système informatique (72). Ce pilote permet soit par un paramètrage initial, soit par un dialogue avec l'utilisateur (33) soit par recherche d'éléments stockés sur le système (72), soit par combinaison de ces moyens, de réunir les éléments nécessaires à l'établissement de "règles" (49) associées au document à produire. Ces "règles" sont identiques à celles définis pour un document normalement issu du dispositif, seules les valeurs encodées sont adaptées à ce nouveau type de source. L'ensemble document (48) + "règles" (49) + identifiant de l'utilisateur (33) est transmis au "serveur de document" (1) via un réseau informatique (71) par utilisation des modules de communication (83) puis (18) des 2 systèmes concernés. Ces éléments ((48) (49) et identifiant) réceptionnés sur le "serveur de document" (1), le "module de contrôle" (15) sollicite le "module de création" (17) qui à partir du document réceptionné (44) et des "règles" réceptionnées (46) produit le document final sous forme numérisé (47). Ce document (47) est pris en charge par le "module de gestion des sorties" (19) qui le stocke sur une file d'attente spécifique (non représentée sur le schéma) en lui attachant l'identifiant de l'utilisateur (33). L'impression n'est libérée qu'en présence de l'utilisateur (33). Pour obtenir la copie désirée, l'utilisateur (33) doit s'identifier auprès du "serveur de document"(1) via le "module interface utilisateur" (11) par saisie de son identifiant et de son mot de passe (ou suivant le cas par un badge magnétique ou équivalent). Suite à cette identification, tous les documents reçus sur le "serveur de document" (1) et attachés à l'utilisateur identifié (33) sont listés. L'utilisateur (33) libère alors le(s) document(s) qu'il désire obtenir, dans ce cas, le "module de gestion des sorties" (19) renvoie le ou les document(s) correspondant(s) de sa file d'attente vers le "module d'impression" (14) pour obtenir la(les) impression(s) désirée(s) (43). Le contrôle identifiant/mot de passe peut se faire par requête au système informatique (72). Si des opérations de gestion sont nécessaires relativement aux impressions de "documents sensibles" fournies, celle-ci a lieu uniquement au moment de la délivrance réelle du(des) document(s) (43).

Le dispositif proposé pour la mise en oeuvre du procédé dans son utilisation dans le cadre de la production d'un original de "document authentifiable" pour exécuter une impression en provenance d'un système informatique, et, dans la production de copie papier authentifiée à partir d'un original de "document authentifiable" est composé d'un "serveur de document" ((1) ou (3)), d'un "pilote" (82) disposé sur tout système informatique devant produire des "documents sensibles" et d'un "serveur d'archivage" (73). Ce dernier (73) comporte principalement un "module de communication" (84) et un "gestionnaire d'archivage" (85). Le "serveur de document"(1) comporte en plus des modules fonctionnels précédemment définis un "module annuaire" (20). Le fonctionnement de ce dispositif est le suivant:
Lorsque une entité désire produire des "documents authentifiables" (92), elle définie sur son système informatique (72) via le gestionnaire d'application (34) les documents à produire (48) et dans le cadre de l'invention les éléments permettant de définir les "règles" (49) de ces documents. Le document à produire est directement construit par un applicatif (81). Les règles sont produites par un pilote (82) suivant le même fonctionnement que précédemment. Lorsque le document est prêt à être produit il est envoyé via un réseau informatique (71) vers le "serveur de document" (1) pour impression et vers un "serveur d'archivage" (73) qui stocke l'image informatique du document (91) via un "gestionnaire d'archivage" (85). Ce gestionnaire (85) doit être capable de retrouver tout document à partir des éléments contenus dans les "règles", il effectue aussi éventuellement tout gestion d'accès ou de mémorisation des copies fournies. La transmission se fait du système informatique (72) via son module de communication (83) vers le "serveur de document" (1) et le serveur d'archivage (73) via leur module de communication respectif (18), (83) et (84). Sur le "serveur de document" (1), le document final (92) est produit comme dans les caractéristiques précédentes via le contrôle éventuel d'un gestionnaire de production (35). Le document produit (92) est transmis à son destinataire (36) via les moyens traditionnels de transmission courrier et de circulation des documents papier. Ce destinataire peut soit être le destinataire direct adressé par l'émetteur (34) ou un organisme externe auquel une copie de ce document aura été transmise par les destinataire initial de celui-ci (pour obtention d'un droit quelconque). Lorsque le destinataire (36) ainsi identifié désire une copie authentifiée de ce document (92) il le présente à son "serveur de document" (3) en requérant auprès de l'interface utilisateur (11) une copie authentifiée et non une copie classique (Toutefois la possibilité d'obtenir une copie authentifiée n'empêche pas à l'utilisateur de demander une copie classique sans authentification à partir d'un original authentifiable). L'utilisateur ne peut aussi présenter qu'un extrait du document original authentifiable en vue d'obtenir une copie de tout ou partie du document global, dans ce cas, dans sa requête il exprime uniquement le souhait d'obtenir une copie authentifiée en réservant la définition précise de la requête lorsqu'il possédera des éléments complémentaires sur le document global. Le document (92) est alors numérisé par le "module de numérisation" (12) de son "serveur de document" (3) pour obtenir une image numérisée (42) de ce document (92). Le module d'analyse (16) après détection du marquage analyse les "règles" suivant le processus défini précédemment. Du résultat de cette analyse, les "règles" sont transcrites sous forme exploitable (45) sans obtenir d'image du document proprement dit (43). Le "module de contrôle" (15) effectue une requête auprès du "module annuaire" (20) afin d'obtenir l'adresse informatique du "serveur d'archivage" (73) associé au système informatique (72) ayant conçu le document initial. Dans le cas d'insuccès de cette requête, la manoeuvre est interrompue avec message correspondant au niveau de l'interface utilisateur (11) afin que l'organisme émetteur puisse être répertorié sur le dispositif par la personne habilitée. Lorsque le "module annuaire" (20) retourne l'adresse informatique, le "module de contrôle" (15) envoie celle-ci accompagnée des références adéquates du document au "module de communication" (18) pour obtenir une copie authentifiée du document. Dans le cas où le document présenté n'est qu'un extrait d'un document global à partir duquel l'utilisateur désire définir plus précisemment la copie désirée (l'extrait du document copié peut divergé de l'extrait présenté), le "serveur d'archivage" (73) renvoie dans un premier temps tous les éléments nécessaires au "serveur de document" (3) pour que l'utilisateur puisse compléter sa requête de copie (sommaire détaillé, coût de la reproduction au niveau droit d'auteur...). Une fois la requête définitivement exprimée, le "serveur d'archivage" (73) via son gestionnaire (85) recherche l'image informatique (91) du document correspondant (92) ou défini à partir de celui-ci. Si la production de la copie demandée est associée à l'acquittement de droits d'auteur, la gestion correspondante est assurée par le "gestionnaire d'archivage" (85) du "serveur d'archivage" (73). La communication se fait via un réseau informatique (71) par utilisation des "modules de communication" respectifs (18) et (84). le "serveur de document" (3) réceptionne l'image informatique du document (91) lui permettant de stocker à la fois l'image numérisée du document proprement dit (46) et les "règles associées" (44) éventuellement adaptées au caractère de copie du document à produire. Le "module de création" (17) produit alors le document numérisé sous sa forme finale (47) à partir de l'image numérisée du document (46) et des "règles finales" (44). A partir de cet élément (47) la copie authentifiée (93) est produite par le "module d'impression" (14) via éventuellement le "module des gestion des sorties" (14).

Le dispositif proposé pour la mise en oeuvre du procédé dans son utilisation dans le cadre de la production de copie informatique authentifiée ou de l'exécution d'une transaction informatique authentifiée (c'est à dire sous contrôle de l'émetteur du document utilisé pour la transaction) à partir d'un original de "document authentifiable" (92) est composé d'un "serveur de document" (3), d'un "serveur d'archivage" (73) et d'un "module de traitement" (87) sur tout système informatique devant recevoir la copie informatique ou enregistrer la transaction informatique. Le "serveur de document"(3) et le "serveur d'archivage" (73) sont identiques à leur définition précédentes, le "pilote" (82) n'est pas utilisé dans le cadre présent.
L'utilisateur (36) peut requerrir d'obtenir à partir d'un "document authentifiable" (92) sous forme papier une copie authentifiée informatique (94) voire une transaction informatique (95) associée au document présenté. Le processus est identique à l'obtention d'une copie papier authentifiée, mais dans ce cas le "serveur de document"(3) après analyse du document (92) et obtention des "règles" correspondantes (42) comme précédemment sollicite le "module de communication" (18) après requête auprès du "module annuaire" (20) afin que le "serveur d'archivage" concerné (73) envoie directement l'image informatique (91) du document présenté (92) au système informatique (74) indiqué par l'utilisateur (36). Le transfert du "serveur d'archivage" (73) vers le système informatique réceptionnaire (74) se fait par l'utilisation d'un réseau informatique (71) via l'utilisation des modules de communication respectifs (84) et (86). Le "gestionnaire d'archivage" (85) gère pour l'émetteur du document original les copies produites (94) ou les transactions générées (95). Un "module de traitement" (87) sur tout système informatique réceptionnaire (74) permet le stockage et la gestion sur celui-ci de la copie informatique authentifiée (94) et la génération des éléments (95) correspondant à la transaction générée (le cas échéant) à partir de l'original présenté (92).

L'invention suivant ses caractéristiques peut être utilisée au sein d'une même entité pour garantir une circulation sécurisée des documents papier. Une entreprise s'équipant des dispositifs décrits, à l'exclusion de tout autre appareil de production ou reproduction de documents, a l'assurance qu'en son sein aucun document sensible ne sera imprimé au vue d'une tierce personne non autorisée, de même le document ne pourra pas au sein de l'entité être reproduit localement ou télécopié. Le piratage des "documents sensibles" implique alors une substitution du document ce qui impose au pirate de prendre des risques et de laisser des traces de son piratage.

Dans le cas ou l'invention devient une norme en matière de production et de reproduction de document, elle permet d'éviter la copie de document de valeur à l'identique (billet de banque, coupon...) et d'assurer au producteur de certains documents de s'assurer un rémunération pour toute diffusion ou copie de leurs oeuvre.

Pour toute entreprise amenée à imprimer des documents ouvrant des droits (documents administratifs, comptables,ou associés à des transactions), l'utilisation du dispositif à l'émission et pour les entreprises enregistrant les droits correspondants permet d'utiliser un papier ordinaire à l'exclusion de toute technologie complexe, en déjouant toute possibilité de falsification puisque celle-ci reste sans effet sur la transaction générée. Ainsi, il est par exemple possible de transformer un chèque émis en virement si les banques sont équipés d'un dispositif adapté, d'encaisser les titres restaurants, de traiter les remboursements complémentaires des mutuelles par rapport aux bordereaux de la sécurité sociale, d'enregistrer pour les comptables ou les contrôleurs des impôts des bulletins de salaire, des factures ou toute pièce comptable. Pour des documents imposants, agrafés ou reliés, l'utilisateur peut, sans défaire le document présenté, obtenir une copie complète juste en présentant une page du document (si cela est autorisé par l'émetteur..). L'émetteur peut garder un contrôle complet des documents qu'il produit ainsi que des reproductions ou transactions obtenues à partir de ces documents voire percevoir des droits d'auteur sur toute copie produite à partir de l'original émis.

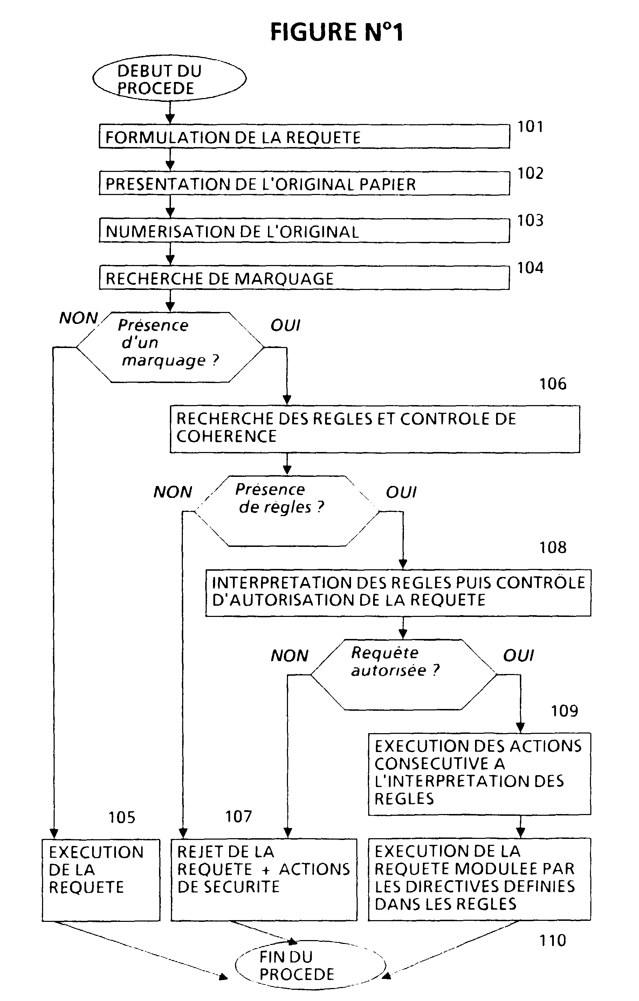

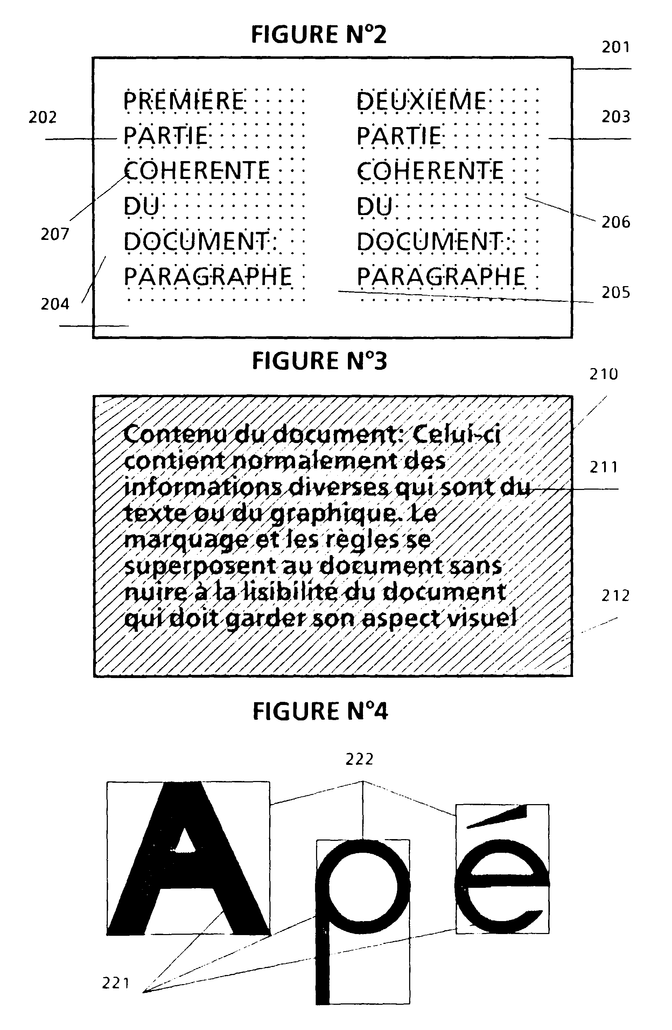

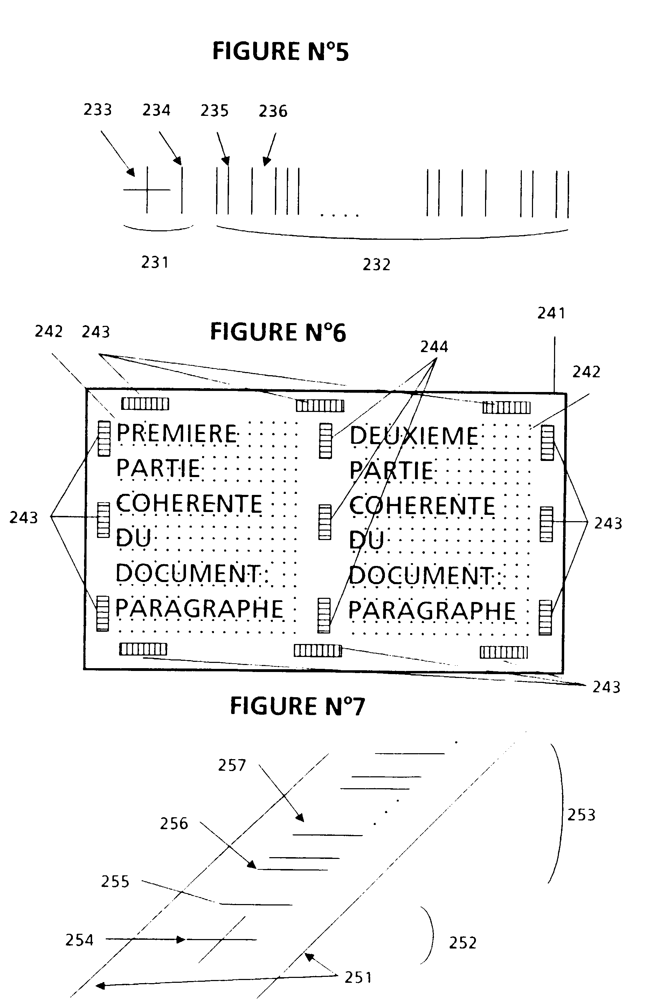

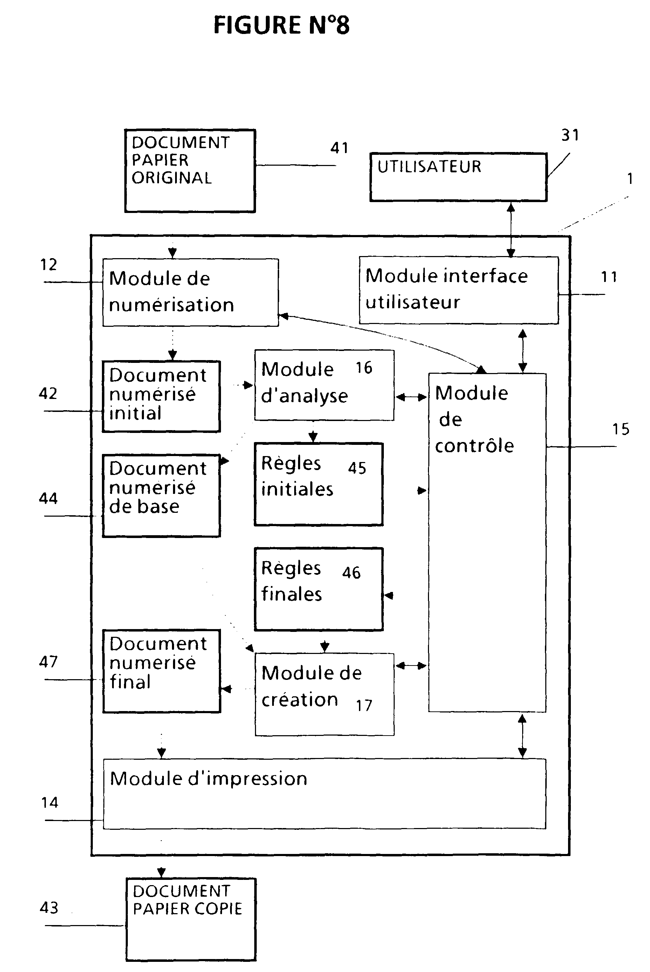

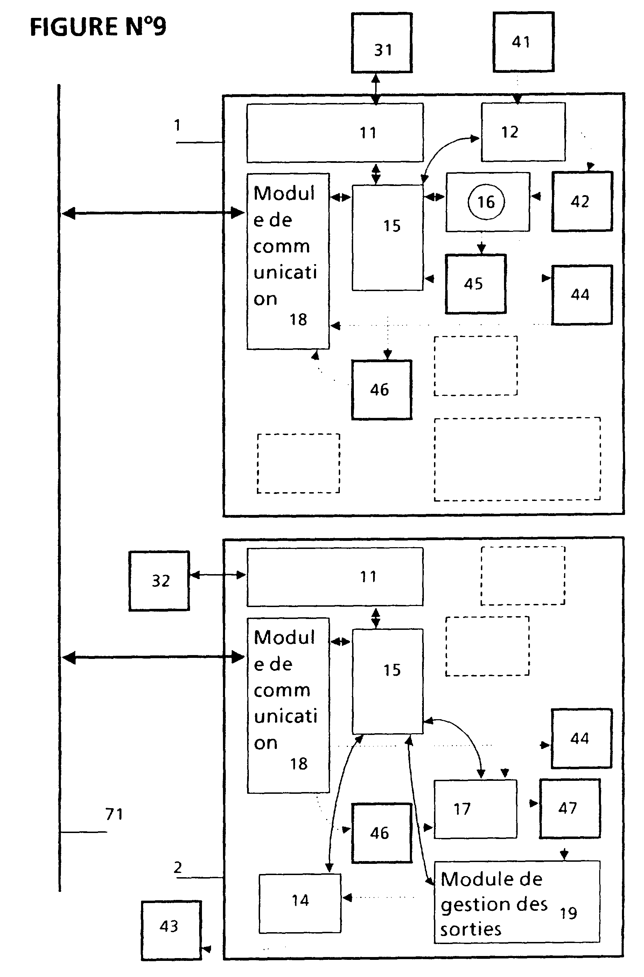

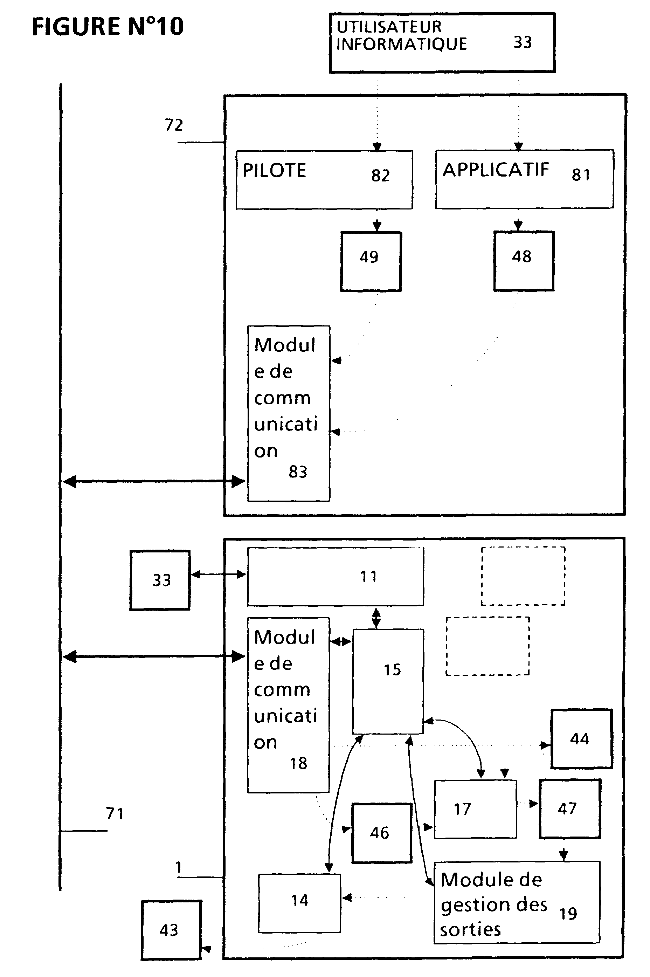

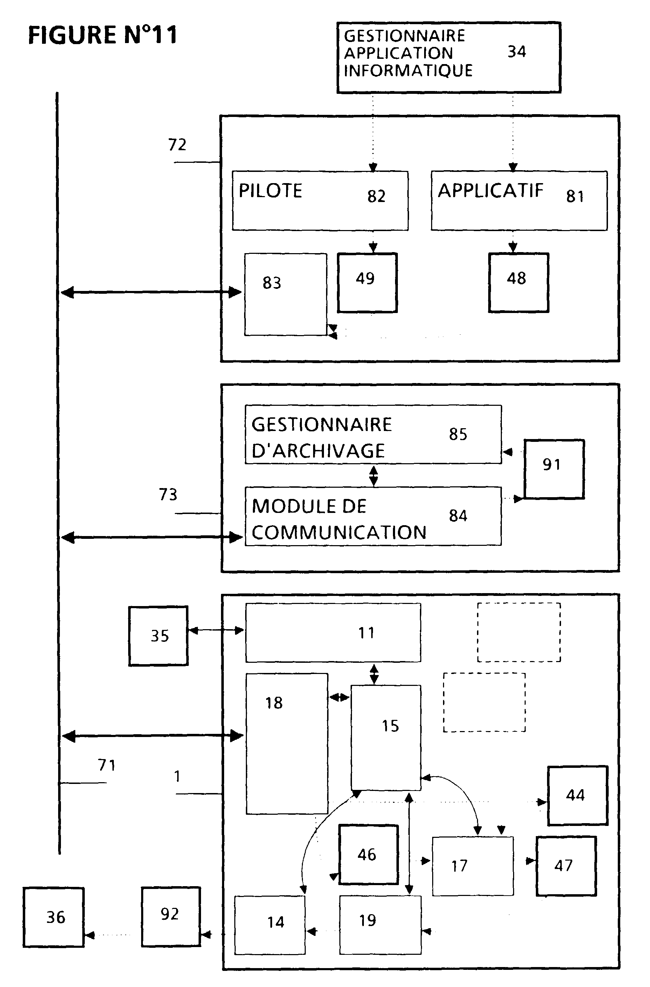

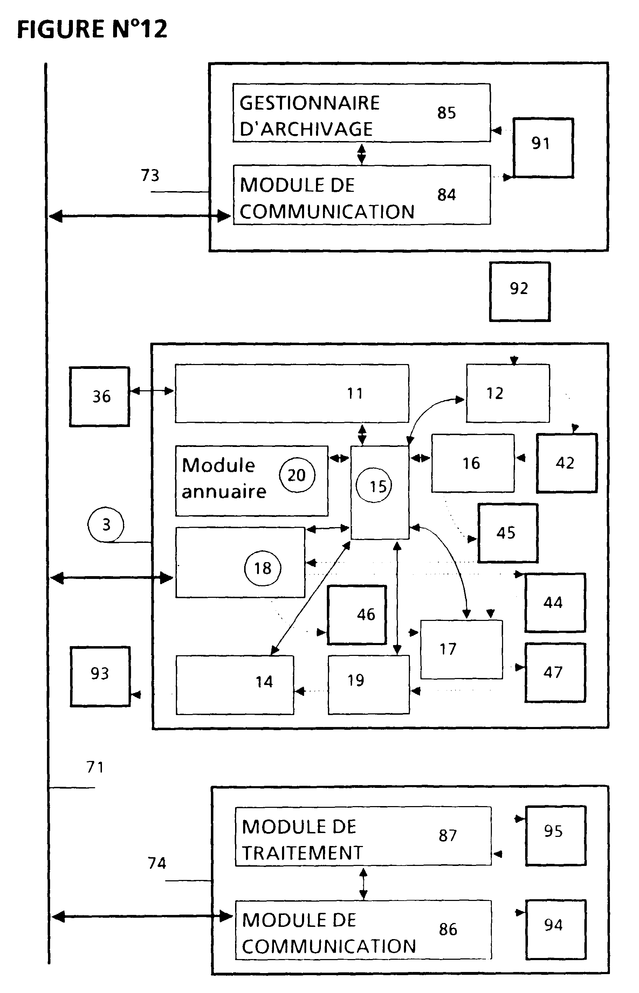

## Revendications

1. Procédé de reproduction et de gestion de documents caractérisé en ce qu'il consiste d'une part à :
- apposer, préalablement sur tout document considéré comme sensible des éléments graphiques spécifiques additionnels dénommés respectivement « marquage » et « règles » :
- le « marquage » est un élément qui permet de différencier les documents dits « sensibles » des documents dits « classiques » et qui est constitué par un graphisme particulier n'altérant pas la lisibilité des documents, mais qui est détectable, ce marquage étant présent uniquement sur tout document considéré comme un document sensible et par conséquent absent de tout document classique ;
- les « règles » sont des éléments concernant tous les documents sensibles, elles définissent les prescriptions et les restrictions de reproduction du document en question ; elles peuvent nécessiter la connaissance d'éléments de référencement et d'identification du document présenté, ceux-ci sont donc intégrés aux « règles » ; ces « règles » permettent d'associer au document les indications concernant les possibilités de reproduction ainsi que les actions que le dispositif de reproduction et de gestion doit exécuter lorsque une copie du document lui est demandée ; lesdites règles viennent en complément du « marquage », un document sans « marquage » n'a pas de « règles », et un élément possédant un « marquage » doit posséder des « règles » ; les « règles » sont codées sur le document en utilisant une technique qui altère au minimum la lisibilité du document proprement dit ; dans le cas où les « règles » autorisent la reproduction du document mais avec altération de l'original, les directives d'altération sont inclues dans les « règles » en utilisant un langage approprié.
et, d'autre part à exécuter les étapes suivantes :
A - Initialisation du processus par l'utilisateur, par présentation d' une requête de définition du travail de reproduction (101) à effectuer sur l'original,
B - Présentation (102) du document original à reproduire,
C- Numérisation (103) de l'original ainsi présenté, celui-ci étant transformé en un élément logique,
D- Recherche (104) du marquage en vue de détecter la présence ou l'absence d'un « marquage » sur l'image logique du document à reproduire, cette présence se traduisant par une valeur logique OUI lorsque le document à reproduire est un document sensible alors que l'absence de détection d'un marquage sur ce document, se traduit par la valeur logique NON indiquant que ledit document est un document classique ; ladite valeur logique conditionnant le déroulement des étapes suivantes :
E- Dans le cas d'absence de détection de marquage identifiant le document à reproduire comme classique, la requête initiale de reproduction est effectuée (105) sur ce document classique.
F- Dans le cas où le document à reproduire est identifié comme un document sensible, porteur de marquage, analyse complémentaire (106) pour rechercher et décrypter les « règles » : le résultat de cette étape est une valeur logique OUI dans le cas où des règles valides sont détectées dans le document traité et une valeur logique NON dans le cas où le document ne comporte pas de règles ainsi que dans le cas où le document comporte des règles invalides.
G- Dans le cas où le résultat de l'étape précédente (F) est un NON logique : rejet (107) de la requête et déclenchement éventuel de mesures de sécurité;
H- Dans le cas où le résultat de l'étape précédente (F) est une valeur logique OUI : interprétation (108) des règles et contrôles d'autorisation de la requête compte-tenu des éléments définis dans les « règles » et des éléments caractérisant la requête et l'utilisateur : le résultat de cette étape est une valeur logique NON si la requête exprimée n'est pas autorisée, entraînant le rejet (107) de la requête, et une valeur logique OUI si la requête est autorisée.
I- Dans le cas où le résultat de l'étape précédente (H) est une valeur logique OUI, traitement (109) de la requête sur le document sensible : l'image numérisée du document à reproduire est générée en fonction des directives découlant de la nature de la requête et de l'exploitation des règles du document sensible, et gestion parallèle d'un archivage sur place ou à distance permettant de contrôler les opérations de reproduction effectuées, en combinaison éventuellement avec des éléments complémentaires fournis par l'utilisateur et,
J- Exécution (110) de la requête : le document, sous sa forme numérisée est éventuellement transformé en un document papier .

2. Procédé selon la revendication 1 caractérisé en ce que ledit marquage figure sur l'intégralité du document.

3. Procédé selon la revendication 1 ou 2 caractérisé en ce que, lorsque le document comporte plusieurs pages, chaque page dudit document est munie d'un marquage et elle est traitée de façon distincte.

4. Dispositif pour la mise en oeuvre du procédé selon l'une quelconque des revendications précédentes, formant serveur de documents, caractérisé en ce qu'il comporte les modules fonctionnels suivants :
- un module interface utilisateur (11) permettant à l'utilisateur de définir sa requête et de pouvoir s'identifier précisément,
- un module de numérisation (12) transformant le document papier à reproduire en un élément logique, afin de permettre une exploitation informatique du document présenté,
- un module d'exécution (14) qui établit la copie définie par la requête utilisateur, à partir des éléments informatiques correspondants, lorsque cela est autorisé,
- un module d'analyse (16), un module de contrôle (15) et un module de création (17) qui sont des modules informatiques :
- le module d'analyse intégrant des algorithmes adaptés à la détection et au décryptage du « marquage » et des « règles » à partir du document numérisé ;
- le module de contrôle assurant le pilotage de l'ensemble des modules et leur cohésion et commandant la reproduction du document.
- le module de création composant l'image numérisée du document authentifié à reproduire, lorsque cette reproduction est autorisée, à partir de l'image numérisée du document original sans son marquage et ses règles, en respectant les directives de modification contenues dans les « règles » de l'original; le document ainsi constitué comportant son propre « marquage » et ses propres « règles »
- un serveur d'archivage (73) comprenant un module de communication (84) et un gestionnaire d'archivage (85), ledit gestionnaire d'archivage effectuant tout gestion d'accès ou de mémorisation des copies fournies.

5. Dispositif selon la revendication 4 caractérisé en ce qu'il comporte en outre :
- un module de communication (18) qui permet à deux serveurs de documents (1) identiques de dialoguer et d'échanger tout fichier informatique nécessaire à la reproduction de documents ; et,
- un module de gestion des sorties (19) qui est un module informatique activé lorsque la copie demandée résulte d'une requête externe au serveur de documents produisant la copie et qui exerce une rétention sur le document à produire, ne le libérant que lorsque le destinataire s'est identifié auprès du serveur de documents récepteur produisant le document.

6. Dispositif selon la revendication 5 caractérisé en ce qu'il comporte un pilote (82) prévu sur tout système informatique (72) devant imprimer des documents sensibles, ledit pilote ayant pour fonction de transmettre au module de communication (18) du serveur de documents (1) l'ensemble des fichiers et caractéristiques nécessaires à la constitution du document désiré.

7. Dispositif selon la revendication 6 caractérisé en ce que ledit serveur d'archivage (73), lors de la production d'un document authentifiable (92) stocke son équivalent informatique (91) en vue de le restituer lorsqu'une requête de production d'une copie authentifiée à partir de ce document authentifiable est exprimée, et en ce que ledit serveur de documents (1-3) comporte notamment un module annuaire (20) qui gère les accès de tout serveur de documents à tout serveur d'archivage.

8. Dispositif selon la revendication 7 caractérisé en ce qu'il comporte en outre un module de traitement (87) intégré à tout système informatique (74) devant réceptionner une copie ou une transaction authentifiée en exécution d'une requête exprimée sur un serveur de documents, sur présentation d'un document authentifiable et sollicitation du serveur d'archivage (73) attaché au document présenté.

## Patentansprüche

1. Verfahren zur Reproduktion und Verwaltung von Dokumenten, **dadurch gekennzeichnet, dass** es darin besteht, einerseits
- zuvor in dem als sensibel angesehenen Dokument zusätzliche spezifische graphische Elemente anzubringen, die als Markierung bzw. Regeln bezeichnet werden, wobei
die Markierung ein Element ist, das es erlaubt, sensible von normalen Dokumenten zu unterscheiden, und welche aus einem bestimmten Zeichensystem besteht, das die Lesbarkeit der Dokumente nicht verändert, jedoch nachweisbar ist, wobei diese Markierung nur in einem als sensibel angesehenen Dokument vorhanden ist und demzufolge in einem normalen Dokument fehlt,
die Regeln die sensiblen Dokumente betreffende Elemente sind, welche die Vorschriften und Einschränkungen zur Reproduktion des betreffenden Dokuments festlegen; sie können die Kenntnis von Elementen zum Nachweis und zur Identifizierung des vorgelegten Dokuments erforderlich machen, die deshalb in die Regeln integriert sind, welche es erlauben, dem Dokument die Hinweise zuzuordnen, die die Reproduktionsmöglichkeiten sowie die Tätigkeiten, welche die Reproduktions- und Verwaltungsvorrichtung ausführen muss, betreffen, wenn von ihr eine Kopie des Dokuments verlangt wird, wobei die Regeln die Markierung ergänzen und ein Dokument ohne Markierung keine Regeln hat und ein Element, das eine Markierung besitzt, Regeln haben muss, wobei die Regeln im Dokument codiert sind, indem ein Verfahren angewendet wird, durch welches die Lesbarkeit des eigentlichen Dokuments wenigstens verändert wird, und in dem Fall, in welchem die Regeln die Reproduktion des Dokuments, jedoch bei Veränderung des Originals, autorisieren, die Veränderungsrichtlinien in den Regeln enthalten sind, wobei eine geeignete Sprache verwendet wird,
und andererseits folgende Schritte auszuführen:
A Initialisierung des Vorgangs durch den Benutzer durch Vorlegen einer Anforderung mit der Beschreibung der mit dem Original durchzuführenden Reproduktionsarbeit (101),
B Vorlegen (102) des zu reproduzierenden Originaldokuments,
C Digitalisierung (103) des so vorgelegten Originals, das in ein logisches Element umgewandelt wird,
D Suche (104) nach der Markierung, um gegebenenfalls in einer logischen Abbildung des zu reproduzierenden Dokuments ihr Vorhandensein nachzuweisen, das sich in dem logischen Wert JA ausdrückt, wenn das zu reproduzierende Dokument ein sensibles Dokument ist, während sich das Fehlen des Nachweises einer Markierung im Dokument im logischen Wert NEIN ausdrückt, was anzeigt, dass das Dokument ein normales Dokument ist, wobei durch den logischen Wert die Abarbeitung folgender Schritte bestimmt wird:
E fehlt der Nachweis einer Markierung, wodurch das zu reproduzierende Dokument als ein normales identifiziert wird, wird die ursprüngliche Anforderung zur Reproduktion mit diesem normalen Dokument ausgeführt (105),
F wenn das zu reproduzierende Dokument als ein eine Markierung enthaltendes sensibles Dokument identifiziert ist, wird ergänzend analysiert (106), um die Regeln zu suchen und zu entschlüsseln, wobei das Ergebnis dieses Schritts der logische Wert JA ist, wenn im verarbeiteten Dokument gültige Regeln gefunden werden, und der logische Wert NEIN ist, wenn das Dokument keine oder ungültige Regeln enthält,
G wenn das Ergebnis des vorhergehenden Schritts (F) ein logisches NEIN ist, wird die Anforderung zurückgewiesen (107) und werden gegebenenfalls Sicherheitsmaßnahmen ausgelöst,
H wenn das Ergebnis des vorhergehenden Schritts (F) der logische Wert JA ist, werden die Regeln interpretiert (108) und wird die Berechtigung der Anforderung unter Berücksichtigung der in den Regeln festgelegten Elemente und der die Anforderung und den Benutzer charakterisierenden Elemente überprüft, wobei das Ergebnis dieses Schritts der logische Wert NEIN, wenn die gestellte Anforderung nicht berechtigt ist, was zur Zurückweisung (107) der Anforderung führt, und der logische Wert JA ist, wenn die Anforderung berechtigt ist,
I wenn das Ergebnis des vorhergehenden Schritts (H) der logische Wert JA ist, wird die Anforderung mit dem sensiblen Dokument bearbeitet (109), wobei die digitalisierte Abbildung des zu reproduzierenden Dokuments in Abhängigkeit von den Richtlinien erzeugt wird, die sich aus dem Charakter der Anforderung und der Beachtung der Regeln des sensiblen Dokuments ergeben, und gleichzeitig eine Archivierung an Ort und Stelle oder woanders ausgelöst wird, die es erlaubt, die durchgeführten Reproduktionsvorgänge zu kontrollieren, gegebenenfalls in Kombination mit ergänzenden Elementen, die vom Benutzer bereitgestellt werden, und
J Ausführung (110) der Anforderung, das digitalisierte Dokument wird gegebenenfalls in ein Papierdokument umgewandelt.

2. Verfahren nach Anspruch 1, **dadurch gekennzeichnet, dass** die Markierung im gesamten Dokument vorhanden ist.

3. Verfahren nach Anspruch 1 oder 2, **dadurch gekennzeichnet, dass,** wenn das Dokument mehrere Seiten umfasst, jede Seite des Dokuments mit einer Markierung versehen ist, die auf eine eigene Weise bearbeitet wird.

4. Vorrichtung zur Durchführung des Verfahrens nach einem der vorhergehenden Ansprüche, welche einen Server für die Dokumente bildet, **dadurch gekennzeichnet, dass** sie folgende Funktionsmodule umfasst:
- ein Benutzer-Schnittstellenmodul (11), das es dem Benutzer erlaubt, seine Anforderung zu definieren und sich genau zu identifizieren,
- ein Digitalisierungsmodul (12), welches das zu reproduzierende Papierdokument in ein logisches Element umwandelt, um eine datenverarbeitende Auswertung des vorgelegten Dokuments zu ermöglichen,
- ein Ausführungsmodul (14), das die durch die Anfrage des Benutzers definierte Kopie aus den entsprechenden Datenelementen herstellt, falls sie berechtigt ist,
- ein Analysemodul (16), ein Steuermodul (15) und ein Erzeugungsmodul (17), die datenverarbeitende Module sind, wobei
- das Analysemodul für den Nachweis und die Entschlüsselung der Markierung und der Regeln aus dem digitalisierten Dokument geeignete Algorithmen integriert,
- das Steuermodul die Steuerung der Gesamtheit der Module und deren Zusammenhang sicherstellt und die Reproduktion des Dokuments steuert,
- das Erzeugungsmodul, welches das digitalisierte Bild des zu reproduzierenden authentifizierten Dokuments, falls die Reproduktion berechtigt ist, aus dem digitalisierten Bild des Originaldokuments ohne dessen Markierung und Regeln zusammensetzt, wobei die in den Regeln des Originals enthaltenen Modifizierungsrichtlinien eingehalten werden und das so erzeugte Dokument seine eigene Markierung und eigenen Regeln enthält, und
- einen Archivierungsserver (73), der ein Kommunikationsmodul (84) und eine Archivverwaltung (85) umfasst, wobei die Archivverwaltung die Verwaltung des Zugriffs auf die oder der Speicherung der gelieferten Kopien durchführt.

5. Vorrichtung nach Anspruch 4, **dadurch gekennzeichnet, dass** sie außerdem umfasst:
- ein Kommunikationsmodul (18), das es zwei Servern identischer Dokumente (1) erlaubt, miteinander in Dialog zu treten und jede Datei auszutauschen, die zur Reproduktion von Dokumenten erforderlich ist, und
- ein Modul für die Verwaltung der Ausgänge (19), das ein aktiviertes Datenverarbeitungsmodul ist, wenn die angeforderte Kopie aus einer externen Anforderung an den Server der Dokumente stammt, der die Kopie erzeugt, und welches eine Sperre des zu erzeugenden Dokuments verursacht, die nur freigegeben wird, wenn sich der Empfänger vor dem Server der Dokumente ausgewiesen hat, der der das Dokument erzeugende Adressat ist.

6. Vorrichtung nach Anspruch 5, **dadurch gekennzeichnet, dass** sie eine Steuerung (82) enthält, die für jedes Datenverarbeitungssystem (72) vorgesehen ist, das sensible Dokumente drucken soll, wobei die Steuerung die Aufgabe hat, dem Kommunikationsmodul (18) des Servers von Dokumenten (1) den Satz von Daten und Merkmalen zu übertragen, die zur Erzeugung des gewünschten Dokuments erforderlich sind.

7. Vorrichtung nach Anspruch 6, **dadurch gekennzeichnet, dass** der Archivierungsserver (73) bei der Erzeugung eines authentifizierbaren Dokuments (92) dessen Datenäquivalent (91) speichert, um es wieder herzustellen, wenn eine Anforderung zur Erzeugung einer authentifizierten Kopie von diesem authentifizierbaren Dokument vorliegt, und dass der Server von Dokumenten (1 bis 3) insbesondere ein Verzeichnismodul (20) enthält, das die Zugriffe von jedem Dokumentenserver auf jeden Archivierungsserver verwaltet.

8. Vorrichtung nach Anspruch 7, **dadurch gekennzeichnet, dass** sie außerdem ein Bearbeitungsmodul (87) enthält, das in jedes Datenverarbeitungssystem (74) integriert ist, das eine Kopie oder eine authentifizierte Transaktion entgegennehmen soll, wobei eine Anforderung ausgeführt wird, die einem Dokumentenserver zur Vorlage eines authentifizierbaren Dokuments vorliegt, und Inanspruchnahme des Archivierungsservers (73), der mit dem vorgelegten Dokument verbunden ist.

## Claims

1. Method for duplicating and managing documents characterised in that it comprises on the one hand:
- attaching in advance to the whole document considered to be sensitive specific additional graphic elements designated "marking" and "rules" respectively:
- the "marking" is an element which makes it possible to differentiate "sensitive" documents from "standard" documents and is composed of specific graphics that do not alter the legibility of the documents, but are detectable, said marking only being present in the document considered to be sensitive and consequently absent from any standard document;
- the "rules" are elements concerning all sensitive documents, they define the regulations and the restrictions on duplicating the document in question; they may necessitate knowledge of the reference and identification elements of the presented document, the latter being integrated into the "rules"; said "rules" permit the association with the document of information relating to the possibilities of duplication as well as actions that the duplicating and managing device must perform when a copy of the document is requested; said rules being complementary to the "marking", a document without "marking" does not have "rules", and an element possessing a "marking" must have "rules"; the "rules are encoded into the document by using a technique which changes the legibility of the actual document to a minimum; in cases where the "rules" authorise the duplication of the document but involve an alteration of the original, the directives for alteration are included in the "rules" using an appropriate language,
and on the other hand the execution of the following stages:
A - initialisation of the process by the user by presentation of a request for definition of the duplication work (101) to be carried out on the original,
B - presentation (102) of the original document to be duplicated,
C - digitalisation (103) of the thus presented original, the latter being transformed into a logical element,
D - search (104) for the marking with a view to detecting the presence or absence of a "marking" on the logical image of the document to be duplicated, its presence being translated as a logical value YES when the document to be duplicated is a sensitive document whilst the absence of a marking on the document is translated as a logical value NO, indicating that said document is a standard document; said logical value affecting the progress of the following stages:
E- in the absence of a marking identifying the document to be duplicated as standard, the initial request for duplication is carried out (105) for this standard document,
F - where the document to be duplicated is identified as a sensitive document, carrying a marking, complementary analysis (106) to search and decipher the "rules"; the result of this stage is a logical value YES where the valid rules are detected in the processed document and a logical value NO when the document does not contain rules as well as when the document comprises invalid rules,
G - where the result of the preceding stage (F) is a logical NO: rejection (107) of the request and possible triggering of safety measures,
H - where the result of the preceding stage (F) is a logical YES : interpretation (108) of the rules and authorisation controls of the request including elements defined in the "rules" and elements characterising the request of the user: the result of this stage is a logical value NO if the expressed request is not authorised, involving the rejection (107) of the request, and a logical value YES if the request is authorised,
I - where the result of the preceding stage (H) is a logical value YES, processing (109) of the request on the sensitive document: the digitalised image of the document to be duplicated is generated as a function of the directives coming from the nature of the request and the use of the rules of the sensitive document, and parallel management of an archive on site or at a distance making it possible to control the performed duplication operations, in possible combination with complementary elements supplied by the user and,
J- execution (110) of the request: the document in its digitalised form is if necessary transformed into a paper document.

2. Method according to claim 1, characterised in that the said marking is integral to the document.

3. Method according to claim 1 or 2, characterised in that when the document comprises several pages each page of said document is provided with a marking and is processed in a separate manner.

4. Device for performing the method according to any one of the preceding claims, constituting server of documents, characterised in that it comprises the following functional modules:
- a user interface module (11) permitting the user to define his request and identify himself precisely,
- a digitalisation module (12) transforming the paper document to be duplicated into a logical element, in order to permit the computerised exploitation of the presented document,
- an execution module (14) which establishes the copy defined by the user's request, from corresponding computer elements when it is authorised,
- an analysis module (16), a control module (15) and a creation module (17) which are computer modules:
- the analysis module integrates the algorithms adapted for the detection and deciphering of the "marking" and "rules" from the digitalised document;
- the control module ensures the driving of the assembly of modules and their cohesion and controls the duplication of the document.
- the creation module composes the digitalised image of the document authenticated for duplication, when said duplication is authorised, from the digitalised image of the original document without its marking and rules, respecting the modification directives contained in the "rules" of the original; the thus composed document comprising its own "marking" and its own "rules",
- an archive server (73) comprising a communication module (84) and a archive manager (85), said archive manager performing all access or storage management of the supplied copies.

5. Device according to claim 4, characterised in that it also comprises:
- a communication module (18) which enables two servers of identical documents (1) to communicate and exchange any computer file necessary for the duplication of documents; and
- a management module of output (19) which is a computer module activated when the requested copy results in an external request to the server of the documents producing the copy and which puts a check on the document to be produced, only releasing it when the destination is identified by the receiving server of the documents producing the document.

6. Device according to claim 5, characterised in that it comprises a drive (82) provided for the entire computer systems (72) printing the sensitive documents, said drive having the function of transmitting to the communication module (18) of the document server (1) of the assembly files and necessary characteristics of the constitution of the desired document.

7. Device according to claim 6, characterised in that said archive server (73), at the time of production of an authenticatable document (92) stores its computer equivalent (91) with a view to restoring it when a request for the production of an authentified copy from this authentifiable document is expressed and in that said server of the documents (1-3) comprises in particular a directory module (20) which manages the access of any document server to any archive server.

8. Device according to claim 7, characterised in that it also comprises a processing module (87) integrated into the whole computer system (74) receiving a copy or an authenticated transaction in execution of a request expressed to a server of documents, on the presentation of an authenticatable document and request of the management server (73) attached to the presented document.
